# EUROPÄISCHE PATENTSCHRIFT

(11) **EP 3 670 894 B1**
(45) Veröffentlichungstag und Bekanntmachung des Hinweises auf die Patenterteilung: **05.04.2023**
(21) Anmeldenummer: 19215640.4
(22) Anmeldetag: 12.12.2019
(51) Int. Cl.: F02M 25/08, B60K 15/073, B62J 35/00, B60K 15/035, B62M 7/02, F02M 37/00

(54) **MOTORRAD MIT SCHWENKBAREM KRAFTSTOFFTANK**
MOTORCYCLE WITH PIVOTABLE FUEL TANK
MOTOCYCLE POURVU DE RÉSERVOIR DE CARBURANT PIVOTABLE

(30) Priorität: 19.12.2018 AT 511302018
(43) Veröffentlichungstag der Anmeldung: 24.06.2020
(73) Patentinhaber: KTM AG, 5230 Mattighofen (AT)
(72) Erfinder: DOMENECH, Juan, 5302 Henndorf am Wallersee (AT); CONTARDO, Luca Francesco, 5201 Seekirchen am Wallersee (AT)
(74) Vertreter: Torggler & Hofmann Patentanwälte - Innsbruck

(56) Entgegenhaltungen:
- EP-A1- 2 236 402
- EP-A1- 2 279 936
- EP-B1- 1 609 709
- DE-A1- 3 234 541
- DE-A1-102017 219 422

## Beschreibung

Die Erfindung betrifft ein Motorrad, umfassend einen Verbrennungsmotor, einen Rahmen, einen Kraftstofftank zur Lagerung eines vom Verbrennungsmotor zu verbrauchenden Kraftstoffs, einen Behälter, der mit dem Verbrennungsmotor und dem Kraftstofftank verbunden ist, wobei der Behälter zur Speicherung von aus dem Kraftstofftank verdunstendem Kraftstoff ausgebildet ist, und wobei der Behälter in einer Gebrauchsstellung zumindest teilweise vom Kraftstofftank überdeckt ist und wobei der Kraftstofftank relativ zum Rahmen zwischen einer Wartungsstellung und der Gebrauchsstellung schwenkbar gelagert ist.

Bei Motorrädern mit Verbrennungsmotoren besteht die Problematik, dass im Kraftstofftank gelagerter Kraftstoff verdunstet, wobei eine Ableitung des verdunsteten Kraftstoffs notwendig ist, um eine Zerstörung des Kraftstofftanks zu vermeiden.

Verständlicherweise ist aus Umweltschutzgründen die Emission von Kohlenwasserstoffen in die Umwelt möglichst gering zu halten. In vielen Ländern sind daher Vorrichtungen gesetzlich vorgeschrieben, mit denen die Emission von verdunstetem Kraftstoff in die Umwelt möglichst unterdrückt wird (evaporative emission control system). Üblicherweise handelt es sich dabei um Vorrichtungen mit denen verdunsteter Kraftstoff, der aus dem Kraftstofftank entweicht, gespeichert und anschließend wieder dem Motor zugeführt werden kann. Zu diesem Zweck sind diese Vorrichtungen häufig in Form eines Behälters ausgebildet, in dem ein Aktivkohlefilter angeordnet ist, von dem verdunsteter Kraftstoff aufgefangen und zwischengespeichert werden kann.

Aufgrund der Vielzahl an Geräten und Apparaten, die in modernen Motorrädern verbaut sind, ist der zur Verfügung stehende Platz für diese Behälter üblicherweise knapp bemessen, wobei Motorrädern von Haus aus viel weniger Platz zur Verfügung steht als Personenkraftwägen. Dazu kommt, dass aufgrund thermischer Anforderungen nur bestimmte Bereiche für die Anordnung dieses Behälters als günstig zu bezeichnen sind. Eine möglichst hohe Absorption ergibt sich bei Aktivkohlefiltern nämlich bei kühlen Bedingungen. Aus diesem Grund sollte der Behälter beispielsweise nicht direkter Sonneneinstrahlung ausgesetzt sein. Im Betrieb des Motorrads wird vom Aktivkohlefilter zwischengespeicherter Kraftstoff dem Motor zugeführt, sodass hierfür möglichst hohe Emissionsraten für den Aktivkohlefilter günstig sind. Die Emission von Kraftstoff aus dem Aktivkohlefilter wiederum wird durch hohe Temperaturen begünstigt. Im Betrieb des Motorrads sollten daher im Bereich des Aktivkohlefilters generell höhere Temperaturen vorherrschen, sodass eine Anordnung in der Nähe des wärmeerzeugenden Verbrennungsmotors günstig ist. Naturgemäß ist eine Anordnung zu nahe am Motor nicht möglich, um eine thermische Schädigung zu vermeiden. Um diesen an sich widersprüchlichen Anforderungen gerecht zu werden, sieht die EP 2 258 938 eine Anordnung des Behälters unterhalb des Kraftstofftanks und gleichzeitig oberhalb des Motors vor. Gemäß der EP 2 279 936 wiederum ist bei Motorrädern eine Anordnung des Behälters vor dem Kraftstofftank und hinter dem Scheinwerfer sinnvoll.

Um lange Zuleitungen zu vermeiden, wird die Vorrichtung zur Unterdrückung der Emission von verdunstetem Kraftstoff, zumeist in Form eines Behälters, in der Nähe des Kraftstofftanks angeordnet. Dabei ergibt sich das Problem, dass für Wartungsmaßnahmen die darunter liegenden Fahrzeugteile schwer zugänglich sind und der Behälter häufig demontiert werden muss. Andernfalls ist die Wartung dieser Fahrzeugteile erschwert, wobei Servicetechniker besonders vorsichtig mit den mit dem Behälter verbundenen Leitungen umgehen müssen, um Beschädigungen zu vermeiden.

Die DE 10 2017 219422 zeigt ein Motorrad mit einem schwenkbaren Kraftstofftank und einem Behälter zur Speicherung von aus dem Kraftstofftank verdunstendem Kraftstoff. Der Behälter ist zwischen den Sitzschienen unterhalb der Schwenkachse des Kraftstofftanks unter dem Kraftstofftank angeordnet. Ein Mitschwenken des Behälters ist daher nicht möglich.

Die DE 32 34 541 zeigt ein Motorrad mit einem schwenkbaren Haupttank und einem nicht schwenkbaren Hilfstank, welche über eine Kraftstoffleitung und eine Entlüftungsleitung verbunden sind. Die Entlüftungsleitung dient zum Abführen von Luft aus dem Hilfstank, wenn der Kraftstoff über den Haupttank eingeleitet wird. Der Hilfstank weist Kraftstoffleitungen zum Haupttank und zum Motor auf und ist damit diesen beiden Elementen zwischengeschaltet. Ein Behälter zur Speicherung von aus dem Kraftstofftank verdunstendem Kraftstoff ist nicht gezeigt.

Aufgabe der vorliegenden Erfindung ist es, diese Nachteile zu vermeiden und ein Motorrad zur Verfügung zu stellen, bei dem eine Vorrichtung zur Verminderung von Verdunstungsemission mit einem Behälter zur Speicherung von verdunstetem Kraftstoff vorgesehen ist, der an einer für die Effektivität des Behälters günstigen Position angeordnet ist, wobei die Wartung von unter dem Kraftstofftank angeordneten Vorrichtungen oder Fahrzeugteilen erleichtert wird.

Diese Aufgabe wird durch ein Motorrad mit den Merkmalen des Anspruchs 1 gelöst.

Die Erfindung betrifft ein Motorrad mit einem Verbrennungsmotor. Unter einem Verbrennungsmotor sollen im Fall der vorliegenden Erfindung Motoren verstanden werden, deren Kraftstoff im Kraftstofftank in flüssiger Form gelagert wird, wie zum Beispiel Benzin- oder Dieselmotoren. Unter einem Motorrad sollen üblicherweise einspurige Kraftfahrzeuge verstanden werden, einschließlich Motorfahrrädern.

Bei Motorrädern sind unterhalb des Kraftstofftanks weitere Fahrzeugteile wie zum Beispiel der Motor angeordnet. Durch die schwenkbare Lagerung des Kraftstofftanks relativ zum Rahmen, wobei die Verschwenkung zwischen einer ersten Stellung, der sogenannten Gebrauchsstellung, in der das Motorrad fahrbereit ist, und einer zweiten Stellung, der sogenannten Wartungsstellung, erfolgt, sind die unterhalb des Tanks angeordneten Vorrichtungen und Fahrzeugteile für Wartungsmaßnahmen besonders gut zugänglich, da der Kraftstofftank beim Verschwenken in die Wartungsstellung nach oben geklappt wird.

Darüber hinaus ist der Behälter bei Motorrädern, bei denen der Kraftstofftank zumeist an der Oberseite des Fahrzeugs angeordnet ist, durch eine zumindest teilweise Überdeckung des Behälters durch den Kraftstofftank in der Gebrauchsstellung vor Sonneneinstrahlung geschützt, sodass für die Absorption von verdunstetem Kraftstoff günstige, kühlere Bedingungen realisierbar sind, wenn das Motorrad nicht in Betrieb ist. Weiters ist durch die zumindest teilweise Überdeckung des Behälters durch den Kraftstofftank in der Gebrauchsstellung auch ein Schutz vor mechanischer Beschädigung gegeben. Häufig befindet sich auch der Verbrennungsmotor unterhalb des Kraftstofftanks. Der Behälter ist durch eine Anordnung, bei der er zumindest teilweise durch den Kraftstofftank in der Gebrauchsstellung überdeckt ist, nicht nur vor Sonneneinstrahlung geschützt, sondern befindet sich zudem in der Nähe des Motors, sodass die während des Betriebs des Motorrads gewünschten höheren Temperaturen für den Behälter realisierbar sind.

Der Behälter kann dabei derart angeordnet sein, dass er nach dem Schwenken des Kraftstofftanks in die Wartungsstellung gut zugänglich ist. Dies ist beispielsweise dann der Fall, wenn der Behälter unmittelbar unter dem Kraftstofftank angeordnet ist oder gemeinsam mit dem Kraftstofftank verschwenkt wird.

Weitere vorteilhafte Ausführungen der Erfindung sind in den abhängigen Ansprüchen definiert.

Der Behälter ist an einer Unterseite und zusätzlich oder alternativ an einer Vorderseite des Kraftstofftanks befestigt. Die Unterseite weist dabei zum Erdboden, die Vorderseite bezieht sich auf die übliche Fahrtrichtung. Bei einem Motorrad ist die Vorderseite des Kraftstofftanks somit der Lenkung zugewandt.

Bei einer Befestigung an einer Unterseite kann die Zuleitung vom Kraftstofftank zum Behälter besonders kurz ausgebildet sein kann. Darüber hinaus ist der Behälter durch eine Befestigung an der Unterseite des Kraftstofftanks besonders gut vor Sonneneinstrahlung geschützt. Weiters ist durch eine Befestigung an der Unterseite des Kraftstofftanks auch ein besonders hoher Schutz vor mechanischer Beschädigung gegeben. Im Falle von einem unterhalb des Kraftstofftanks angeordneten Verbrennungsmotors befindet sich der Behälter durch eine Befestigung auf der Unterseite und/oder Vorderseite des Kraftstofftanks in der Nähe des Motors, sodass die während des Betriebs des Motorrads gewünschten höheren Temperaturen für den Behälter realisierbar sind ohne Gefahr zu laufen, thermisch geschädigt zu werden, da ein gewisser Abstand vom Motor durch die Befestigung am Kraftstofftank gegeben ist.

In Folge der schwenkbaren Lagerung des Kraftstofftanks relativ zum Rahmen am Motorrad, wobei der Kraftstofftank zwischen einer Wartungsstellung und einer Gebrauchsstellung, in der das Motorrad fahrbereit ist, schwenkbar ist, ist es möglich den Kraftstofftank in die Wartungsstellung zu verschwenken, um dadurch einfachen Zugang zu den darunter angeordneten Fahrzeugteilen zu erlangen. Indem die als Behälter ausgebildete Vorrichtung zur Unterdrückung der Emission vom aus dem Kraftstofftank verdunstendem Kraftstoff am Kraftstofftank befestigt ist und gemeinsam mit diesem verschwenkt wird, ist der Zugang zu den darunter angeordneten Fahrzeugteilen besonders einfach und der Behälter muss nicht gesondert demontiert werden. Beim Behälter selbst und der darin angeordneten Vorrichtung zur Speicherung von verdunstetem Kraftstoff, etwa einem Aktivkohlefilter, handelt es sich um an sich im Stand der Technik bekannte Vorrichtungen. Beispielsweise kann es beim Behälter um ein Modell der Firma Sentec oder ein Modell der Firma LydsTech handeln, welche jeweils mit einem Aktivkohlefilter zur Speicherung der emittierten Kraftstoffgases ausgestattet sind.

Durch eine Befestigung des Behälters am Kraftstofftank und gegebenenfalls auch der Zu- und Ableitung zum und vom Behälter wird die Montage eines erfindungsgemäßen Motorrads wesentlich erleichtert, wobei zudem die notwendige Anzahl an Klammern und Halterungen am Rahmen verringert werden kann und eine sauberere Leitungsführung der Zu- und Ableitung möglich ist. Durch die gemeinsame Verschwenkbarkeit wird der Behälter samt Zu- und Ableitung mit dem Kraftstofftank verschwenkt, sodass die darunter angeordneten Fahrzeugteile besonders gut zugänglich sind. Auch der Behälter selbst ist nach dem Schwenken des Kraftstofftanks gut zugänglich.

Ein weiteres Problem ist die Gefahr des Eindringens von flüssigem Kraftstoff in den Behälter, da ansonsten der darin angeordnete Aktivkohlefilter beschädigt oder gar zerstört werden könnte. Um das Auslaufen von flüssigem Kraftstoff zu verhindern, beispielsweise wenn das Motorrad im Falle eines Unfalls umkippt, ist zwar zum Teil ein sogenanntes Rollover-Ventil vorgesehen, welches sich häufig in der Zuleitung vom Kraftstofftank zum Behälter befindet, sodass damit automatisch ein Schutz des Behälters gegen Eindringen von flüssigem Kraftstoff gegeben ist. Allerdings kann es auch wünschenswert sein, dieses Rollover-Ventil nicht im Bereich der Zuleitung zum Behälter, sondern im Bereich der Ableitung vom Behälter anzuordnen. Zudem hängt die Funktionsweise des Rollover-Ventils zum Teil auch von der Richtung ab, in welcher der Kraftstofftank gekippt wird. Bei einem nach oben verschwenkten Kraftstofftank kann die Funktionalität des Rollover-Ventils eingeschränkt sein.

Dazu kann vorgesehen sein, dass der Behälter relativ zur Zuleitung, über die der Behälter mit dem Kraftstofftank verbunden ist, an einer Position am Kraftstofftank, vorzugsweise an dessen Unterseite und/oder dessen Vorderseite, befestigt ist, dass bei einem Verschwenken des Kraftstofftanks in die Wartungsstellung ein Zufluss von flüssigem Kraftstoff in den Behälter verhindert wird. Dies ist insbesondere dann von Vorteil, wenn kein Rollover-Ventil vorgesehen ist.

Zu diesem Zweck kann vorgesehen ein, dass die schwenkbare Lagerung des Kraftstofftanks an einer ersten Hälfte des Kraftstofftanks erfolgt, während der Behälter im Bereich der anderen Hälfte des Kraftstofftanks am Kraftstofftank befestigt ist, wird mit der Verschwenkung des Kraftstofftanks von der Gebrauchsstellung in die Wartungsstellung die der ersten Hälfte gegenüberliegende andere Hälfte und damit auch der an dieser Hälfte befestigte Behälter nach oben verschwenkt. Ist demgegenüber der Behälter an einer Stelle am Kraftstofftank befestigt, bei der der Behälter nicht oder nur wenig während des Verschwenkens des Kraftstofftanks bewegt wird, kann es vorkommen, dass im Kraftstofftank angeordneter flüssiger Kraftstoff in die Zuleitung und in weiterer Folge in den Behälter eindringt und somit die im Behälter angeordnete Vorrichtung zur Speicherung von verdunstetem Kraftstoff, insbesondere ein Aktivkohlefilter, beschädigt. Durch die Befestigung auf jener Hälfte des Kraftstofftanks, die der ersten Hälfte gegenüberliegt, befindet sich der Behälter im Vergleich zur Zuleitung im Kraftstofftank in einer erhöhten Position, in der trotz Verschwenkbewegung kein flüssiger Kraftstoff in den Behälter eindringen kann. Somit kann der Kraftstofftank in die Wartungsstellung verschwenkt werden, ohne Gefahr zu laufen, dass flüssiger Kraftstoff in den Behälter eindringt. Eine Beschädigung kann somit verhindert werden.

Bevorzugt ist dabei vorgesehen, dass sich die Hälfte dabei auf die Längsrichtung des Kraftstofftanks bezieht, welche bei Motorrädern der Längsrichtung des Motorrads entspricht. Die schwenkbare Lagerung erfolgt dabei an der in Fahrtrichtung hinteren Hälfte und die Befestigung des Behälters an der in Fahrtrichtung vorderen Hälfte oder umgekehrt. Dabei wird der Kraftstofftank um eine senkrecht zur Längsrichtung des Fahrzeugs angeordnete Achse verschwenkt, wobei es sich dabei um die Querrichtung handelt. Es ist aber auch möglich, dass sich die Hälfte des Kraftstofftanks auf die zur Längsrichtung senkrecht angeordnete Querrichtung bezieht. In diesem Fall ist die Verschwenkachse in Längsrichtung angeordnet.

Noch besser ist der Schutz gegen Eintritt von flüssigem Kraftstoff, wenn die schwenkbare Lagerung des Kraftstofftanks an einem ersten Endbereich des Kraftstofftanks erfolgt und die Befestigung des Behälters an einem zweiten, dem ersten Endbereich gegenüberliegenden Endbereich erfolgt. Durch die Befestigung an einem zweiten, dem ersten Endbereich gegenüberliegenden Endbereich, befindet sich der Behälter in der Wartungsstellung des Kraftstofftanks im Vergleich zur Zuleitung im Kraftstofftank in einer noch weiter erhöhten Position, sodass ein Eindringen von flüssigem Kraftstoff in den Behälter bei der Verschwenkbewegung noch besser verhindert wird.

Bevorzugt ist dabei vorgesehen, dass sich die der vordere Endbereich dabei auf das in Längsrichtung vordere Drittel, vorzugsweise das vordere Viertel des Kraftstofftanks bezieht. Die schwenkbare Lagerung erfolgt dabei an dem in Fahrtrichtung hinteren Drittel, vorzugsweise Viertel, und die Befestigung des Behälters auf dem in Fahrtrichtung vorderen Drittel, vorzugsweise Viertel, oder umgekehrt. Dabei wird der Kraftstofftank um eine senkrecht zur Längsrichtung des Fahrzeugs angeordnete Achse verschwenkt, wobei es sich dabei um die Querrichtung handelt. Es ist aber auch möglich, dass sich der erste und zweite Endbereich des Kraftstofftanks auf die zur Längsrichtung senkrecht angeordnete Querrichtung beziehen. In diesem Fall ist die Verschwenkachse in Längsrichtung angeordnet.

Obgleich es an sich auch vorstellbar ist, dass die schwenkbare Lagerung durch speziell geformte Teile des Kraftstofftanks und dazu korrespondierender Teile des Motorrads erfolgt, ohne dass der Kraftstofftank mit dem Motorrad im Bereich der Lagerstelle fest verbunden ist, ist in einer bevorzugten Ausführungsform der Erfindung vorgesehen, dass der Kraftstofftank über eine, vorzugsweise lösbare, Gelenkverbindung schwenkbar am Motorrad gelagert ist. Die Gelenkverbindung ist vorzugsweise als Scharnier ausgebildet. Bevorzugt ist auch vorgesehen, dass die Gelenkverbindung aus zwei oder mehreren Gelenkverbindungen besteht, beispielsweise eine am in Fahrtrichtung linken Randbereich des Kraftstofftanks und eine am in Fahrtrichtung rechten Randbereich des Kraftstofftanks. Beispielsweise können somit zwei Scharniere, etwa eines links und eines rechts in Fahrtrichtung, am Kraftstofftank vorgesehen sein. Es kann auch vorgesehen sein, die schwenkbare Lagerung, insbesondere die Gelenkverbindung ganz an einem Ende des Kraftstofftanks anzuordnen, während die Befestigung des Behälters im gegenüberliegenden Endbereich erfolgt.

Bevorzugt ist vorgesehen, die schwenkbare Lagerung des Kraftstofftanks derart auszubilden, dass dieser um eine senkrecht zur Längsrichtung des Motorrads angeordnete Achse schwenkbar gelagert ist, wobei diese Achse dabei in Querrichtung des Fahrzeugs angeordnet ist. Im aufrechten Zustand des Fahrzeugs ist die Querrichtung ebenso wie die Längsrichtung horizontal ausgerichtet.

Motorräder verfügen in der Regel über Kraftstofftanks, die in Längsrichtung des Fahrzeugs größere Ausmaße als in der dazu senkrechten Richtung aufweisen. Bei einer schwenkbaren Lagerung um eine senkrecht zur Längsrichtung des Fahrzeugs angeordnete Achse kann der Kraftstofftank daher über einen größeren Bereich verschwenkt werden, das heißt der Winkel zwischen der Wartungsstellung und der Gebrauchsstellung, bei der das Motorrad fahrbereit ist, ist größer. Der maximale Verschwenkwinkel hängt insbesondere von der Geometries des Kraftstofftanks ab und kann etwa in einem Bereich zwischen 15° und 100° liegen. Je größer dieser Winkel, umso besser ist die Zugänglichkeit zu den darunter liegenden Fahrzeugteilen.

Der Behälter ist über eine Zuleitung mit dem Kraftstofftank verbunden. Über diese Zuleitung wird verdunsteter Kraftstoff zum Behälter geführt. Weiters kann eine Ableitung vorgesehen sein, über die verdunsteter Kraftstoff dem Motor zugeführt wird. Üblicherweise handelt es sich dabei um gasförmigen Kraftstoff, der von der Speichervorrichtung im Behälter, etwa in Form eines Aktivkohlefilters re-emittiert wird. Die Zufuhr zum Verbrennungsmotor erfolgt dabei in an sich im Stand der Technik bekannter Weise, wobei der gasförmige Kraftstoff zunächst einer Drosselklappe oder direkt in die Ansaugleitung und von dort zusammen mit dem übrigen Kraftstoff-Luft-Gemisch dem Verbrennungsmotor zugeführt wird. Weiters kann der Behälter mit einer Abflussleitung verbunden sein. Die Abflussleitung dient dazu, den verdunsteten Kraftstoff, der von der Speichervorrichtung im Behälter re-emittiert wird, in die Umwelt abzuleiten, wenn das Motorrad nicht in Betrieb ist und daher re-emittiertes Kraftstoffgas nicht vom Motor verbrannt werden kann. Durch diese Abflussleitung kann daher eine Beschädigung des Behälters vermieden werden.

Der Behälter selbst ist bevorzugt aus Kunststoff, etwa aus Polyamid hergestellt. Es wäre aber auch möglich, den Behälter aus Metall herzustellen. Bei der Zuleitung, der Ableitung und der Abflussleitung handelt es sich bevorzugt, um flexible, benzinfeste Schläuche, beispielsweise aus Gummi wie etwa EPDM. Durch die Flexibilität der Schläuche können diese flexibel platziert werden, wodurch eine Beschädigung, der Zu-, Ableitung und der Abflussleitung beim Verschwenken des Kraftstofftanks vermieden werden. Insbesondere ist es nicht notwendig, diese Leitungen vor dem Verschwenken zu demontieren.

Es kann vorgesehen sein, die Zuleitung und zusätzlich oder alternativ die Ableitung und zusätzlich oder alternativ die Abflussleitung am Kraftstofftank zu befestigen. Dies hat den Vorteil, dass bei der Verschwenkung des Kraftstofftanks von der Gebrauchsstellung in die Wartungsstellung nicht nur der Behälter, sondern auch die mit dem Behälter verbundenen Leitungen zumindest teilweise mit verschwenkt werden, sodass darunter liegende Fahrzeugteile besonders einfach zugänglich sind. Für die Befestigung der Leitungen kommen an sich im Stand der Technik bekannte Vorrichtungen in Frage, wie etwa metallische Klammern und/oder elastische Befestigungsmittel. Insbesondere kann es vorgesehen sein, das gesamte Emissionssystem am Kraftstofftank zu befestigen. Unter dem Emissionssystem ist im vorliegenden Fall das System zur temporären Speicherung und Re-Emission von im Kraftstofftank verdunstendem Kraftstoff zu verstehen. Neben dem Behälter und der im Behälter angeordneten Speichervorrichtung, beispielsweise in Form eines Aktivkohlefilters, gehören dazu die Zuleitung vom Kraftstofftank zum Behälter, die Ableitung vom Behälter in Richtung des Motors und gegebenenfalls die Abflussleitung, ein Entlüftungsventil (Purge-Ventil) sowie ein oder mehrere Rollover-Ventile zur Vermeidung des Austritts von flüssigem Kraftstoff.

Es kann vorgesehen sein, dass das Emissionssytem weiters eine Steuervorrichtung umfasst, mit der die Re-Emission und/oder die Zufuhr von reemittiertem Kraftstoffgas zum Motor in Anhängigkeit des Motorzustands erfolgt. Diese Steuervorrichtung kann ebenfalls am Kraftstofftank befestigt sein. Es kann aber auch vorgesehen sein, die Steuervorrichtung gesondert an einem anderen Platz am Motorrad anzuordnen. Schließlich kann die Steuervorrichtung auch Teil des Entlüftungsventils sein.

Die schwenkbare Lagerung des Kraftstofftanks kann auf der von Lenkung entfernten Seite des Kraftstofftanks vorgesehen sein. Bei Motorrädern ist der Kraftstofftank stets in einer Seitenansicht hinter der Lenkung angeordnet. Ist der Kraftstofftank auf der von der Lenkung entfernten Seite des Kraftstofftanks schwenkbar gelagert, also auf der in Fahrtrichtung hinteren Seite, wird die der Lenkung zugewandte Seite des Kraftstofftanks bei der Verschwenkung in die Wartungsstellung nach oben verschwenkt. Bei einer Befestigung des Behälters auf jener Hälfte oder jenem Endbereich des Kraftstofftanks, welcher der Lenkung zugewandt ist, wird der Behälter weit genug nach oben verschwenkt, um einen Eintritt von flüssigem Kraftstoff zu verhindern. Zudem ist bei dieser Anordnung der Behälter sowohl in der Nähe des Motors als auch des Kühlers platzierbar, sodass im Betrieb des Motors warme aber nicht zu heiße Umgebungstemperaturen für den Behälter vorherrschen. Nach dem Abschalten des Motorrads kann der Kühler den Behälter zusätzlich abkühlen. Zu diesem Zweck kann vorgesehen sein, dass Behälter in der Gebrauchsstellung des Kraftstofftanks oberhalb des Motors und hinter dem Kühler angeordnet ist.

Weiters schließt bei Motorrädern häufig ein Sattel an den Kraftstofftank an, in dessen Bereich der Kraftstofftank schwenkbar gelagert sein kann. Im Falle einer Gelenkverbindung für die schwenkbare Lagerung kann diese durch den Sattel überdeckt und somit geschützt sein.

Die Lagerung des Kraftstofftanks kann am Rahmen erfolgen. Im Falle einer Gelenkverbindung kann dazu ein Teil der Gelenkverbindung am Kraftstofftank ausgebildet oder befestigt sein, während das entsprechende Gegenstück am Rahmen ausgebildet oder befestigt ist. Der Rahmen kann dabei Seitenelemente aufweisen, die auf der in Fahrtrichtung gesehenen linken und der rechten Seite des Rahmens angeordnet sind. Dabei kann der Behälter zwischen den Seitenelementen angeordnet sein. Innerhalb der Seitenelemente angeordnete Teile sind vor mechanischer Beschädigung besonders gut geschützt. Dies gilt bei dieser Anordnung daher auch für den Behälter. Häufig werden Verkleidungsteile auf den Seitenelementen angeordnet. In diesem Fall ist der Behälter besonders effektiv vor Sonneneinstrahlung geschützt. Neben dem Behälter kann es auch vorgesehen sein, weitere Teile des Emissionssystems wie etwa die Zuleitung, die Ableitung und/oder die Abflussleitung, ein Entlüftungsventil (Purge-Ventil) sowie etwaige Rollover-Ventile innerhalb der Seitenelemente anzuordnen.

In einer besonderen Ausführungsform ist der Rahmen als Doppelrohrrahmen ausgeführt, wobei jedes der Seitenelemente einen Oberzug und einen Unterzug aufweist. Dabei kann der Behälter in der Gebrauchsstellung des Kraftstofftanks im Wesentlichen zwischen dem Oberzug und dem Unterzug angeordnet sein. Innerhalb des Oberzugs und des Unterzugs ist die mechanische Stabilität des Rahmens besonders hoch, sodass hier besonders guter Schutz geboten wird. Dabei können auch hier bestimmte Teile des Emissionssystems, wie etwa Zuleitung, Ableitung, Abflussleitung und/oder Entlüftungsventil (Purge-Ventil) und Rollover-Ventil im Wesentlichen zwischen oberem und unterem Längsrohr angeordnet sein. Der Rahmen selbst kann auch als Gitterrohrrahmen ausgebildet sein.

Bevorzugt ist der Behälter im Wesentlichen zylinderförmig ausgebildet, was sich in Bezug auf seine Funktionsweise als vorteilhaft herausgestellt hat. Weiters kann es vorgesehen sein, den Behälter derart am Kraftstofftank zu befestigen, dass die Längsrichtung des Behälters senkrecht zur Längsrichtung des Motorrads angeordnet ist, insbesondere bei im Wesentlichen zylinderförmig ausgebildeten Behältern. Bevorzugt ist vorgesehen, dass die Längsrichtung des Behälters in Querrichtung des Fahrzeugs angeordnet ist. Die Befestigung des Behälters am Kraftstofftank erfolgt zum Beispiel mittels einer metallischen Klammer und/oder einem elastischen Befestigungsmittel, wobei jedoch auch andere Befestigungsmittel möglich sind.

Bevorzugt ist vorgesehen, dass der Behälter eine Ausdehnung in seiner Längsrichtung zwischen 20 % und 90 % der Ausdehnung des Kraftstofftanks in dieser Richtung aufweist. Dies gilt insbesondere, wenn der Behälter am Kraftstofftank befestigt ist. Besonders bevorzugt ist ein Bereich zwischen 30 % und 60 % vorgesehen. Für den Fall, dass die Längsrichtung des Behälters, also die Richtung seiner größten Ausdehnung, senkrecht zur Ausrichtung des Motorrads angeordnet ist, weist der Behälter somit eine Ausdehnung zwischen 20% und 90 %, vorzugsweise zwischen 30 % und 60 % der seitlichen Ausdehnung des Kraftstofftanks auf. Indem der Kraftstofftank über den Behälter hervorsteht, wird der Behälter besonders gut geschützt. Zudem ist es im Bereich dieser Ausdehnung auch noch möglich, Teile des Emissionssystems, wie etwa Zuleitung, Ableitung, Abflussleitung, Entlüftungsventil (Purge-Ventil) und/oder Rollover-Ventil vom Kraftstofftank überdecken zu lassen und damit zu schützen. Zu geringe Werte der Ausdehnung des Behälters sind jedoch ungünstig, da diese mit einem unzureichenden Speichervolumen verbunden wären.

Es kann vorgesehen sein, dass der Behälter in der Gebrauchsstellung des Kraftstofftanks zumindest teilweise, vorzugsweise zur Gänze oberhalb des unteren Endes des Kraftstofftanks angeordnet ist. Das bedeutet, dass der Behälter in einer Seitansicht des Motorrads zumindest teilweise, vorzugsweise zur Gänze oberhalb einer gedachten horizontalen Ebene am unteren Ende des Kraftstofftanks angeordnet ist. Insbesondere, wenn der Behälter an der Unterseite des Kraftstofftanks befestigt ist, ist zu diesem Zweck die Unterseite des Kraftstofftanks nach oben geneigt oder weist eine entsprechende Ausbuchtung für den Behälter auf.

Es kann vorgesehen sein, den Behälter derart am Kraftstofftank zu befestigen, dass dieser zumindest teilweise, vorzugsweise zur Gänze, in einer Seitenansicht hinter einer gedachten vertikalen Ebene am vorderen Ende des Kraftstofftanks angeordnet ist.

Weitere Einzelheiten und Vorteile der vorliegenden Erfindung werden anhand der nachfolgenden Figurenbeschreibung erläutert. Dabei zeigen:
- Fig. 1a bis 1d: eine perspektivische Ansicht, eine Draufsicht, eine Ansicht von vorne und eine Ansicht von hinten auf ein erfindungsgemäßes Motorrad,
- Fig. 2: eine schematische Seitenansicht eines erfindungsgemäßen Motorrads, wobei der Kraftstofftank in Gebrauchsstellung ist,
- Fig. 3a und 3b: eine schematische Seitenansicht eines erfindungsgemäßen Motorrads, wobei der Kraftstofftank in Wartungsstellung ist sowie eine perspektivische Detailansicht dazu,
- Fig. 4: eine schematische Seitenansicht von Teilen des erfindungsgemäßen Motorrads
- Fig. 5: eine schematische Vorderansicht von Teilen des erfindungsgemäßen Motorrads
- Fig. 6a und 6b: eine Seitenansicht und eine perspektivische Ansicht von unter auf den Kraftstofftank mit daran befestigtem Behälter,
- Fig. 7: eine schematische Darstellung des Inneren des Kraftstofftanks in Bezug auf die Zuleitung zum Behälter und
- Fig. 8: eine Darstellung zur Befestigung des Behälters.

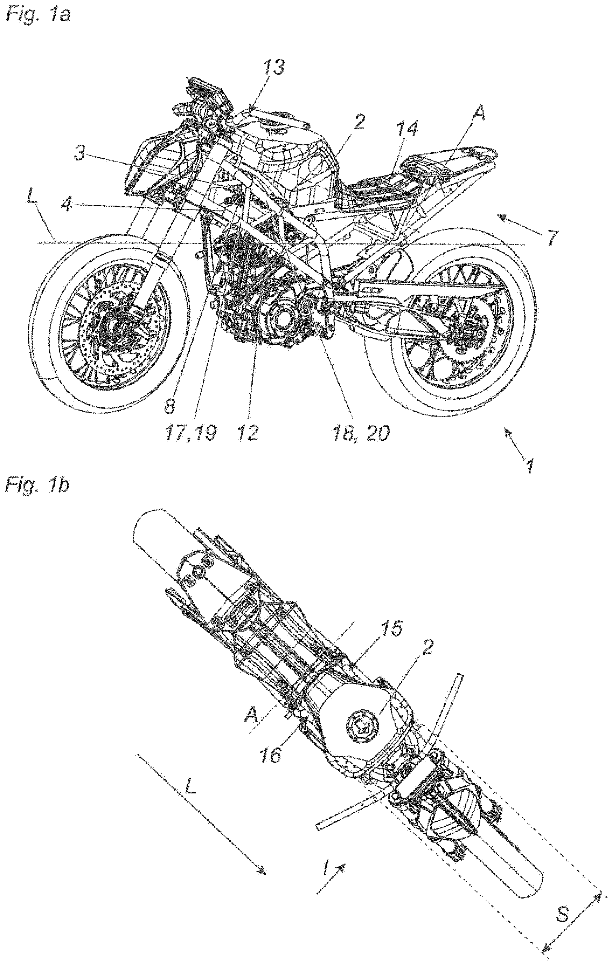

Fig. 1a zeigt eine perspektivische Ansicht eines erfindungsgemäßen Motorrades 1, wobei ein Behälter 3 an der Unterseite 8 des Kraftstofftanks 2 befestigt ist. Der Kraftstofftank 2 ist mittels einer Gelenkverbindung 6 um eine in Querrichtung des Motorrads 1 angeordnete Achse A, also senkrecht zur Längsrichtung L des Motorrads 1, schwenkbar gelagert, wobei die Gelenkverbindung 6 vom Sattel 14 überdeckt ist. Je nach Ausbildung der Gelenkverbindung 6 kann es zur Verschwenkung des Kraftstofftanks 2 daher notwendig sein, vorher den Sattel 14 zu demontieren. Der Rahmen 7 des Motorrads 1 ist als Gitterrohrrahmen ausgebildet, wobei der Behälter 3 zwischen dem linken Seitenelement 15 und dem rechten Seitenelement 16 angeordnet ist und sich in der Gebrauchsstellung des Kraftstofftanks 2 im Wesentlichen zwischen den Oberzügen 18, 20 und den Unterzügen 17, 19 des linken Seitelementes 15 und des rechten Seitenelements 16 des Rahmens 7 befindet. Der Motor 12 ist unterhalb des Kraftstofftanks 2 angeordnet, sodass die Abwärme des Motors 12 die Umgebungstemperatur für den Behälter 3 erhöht, wodurch die im Inneren des Behälters 3 angeordnete Speichervorrichtung eine höhere Rate an Re-Emission von Kraftstoffgas aufweist. Der in dieser Figur aus Gründen der Übersichtlichkeit nicht dargestellte Kühler 24 befindet sich vor dem Motor 12 und läuft auch nach Abschalten des Motorrads 1 eine gewisse Zeit nach, um den Motor 12 zu kühlen. In dieser Position des Behälters 3 wird dieser ebenfalls vom Kühler 24 gekühlt, sodass die nach dem Abschalten des Motorrads 1 günstigen Bedingungen für eine hohe Absorptionsrate der im Behälter 3 angeordneten Speichervorrichtung gegeben sind.

Fig. 1b zeigt eine Draufsicht des erfindungsgemäßen Motorrads 1. Der Behälter 3 ist an der Unterseite 8 des Kraftstofftanks 2 befestigt und wird von diesem überdeckt. Der Behälter 3 ist dabei derart angeordnet, dass seine Längsrichtung I in Querrichtung des Motorrads 1, also senkrecht zur Längsrichtung L des Motorrads 1, angeordnet ist. Die seitliche Ausdehnung S des Kraftstofftanks 2 in der Querrichtung ist größer als die Ausdehnung des Behälters 3 in seiner Längsrichtung I, wodurch sich die erfindungsgemäße Überdeckung des Kraftstofftanks 2 ergibt. Der Kraftstofftank 2 ist um eine Achse A schwenkbar gelagert, wobei die Achse A in Querrichtung des Motorrads 1, also senkrecht zur Längsrichtung L des Motorrads 1, angeordnet ist.

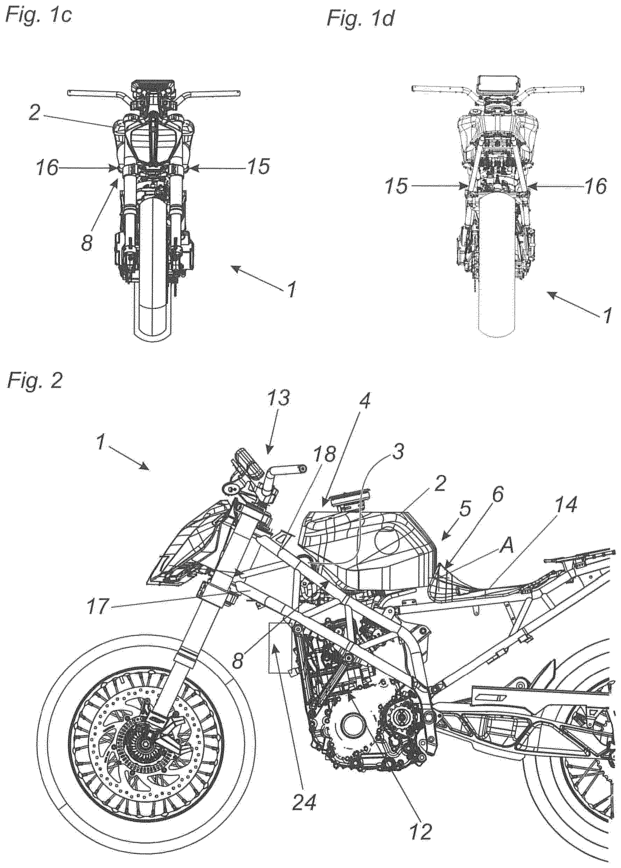

Fig. 1c zeigt das erfindungsgemäße Motorrad 1 in einer Ansicht von vorne. In der vorderen Hälfte ist die Unterseite 8 des Kraftstofftanks 2 in der Gebrauchsstellung im gezeigten Ausführungsbeispiel nach oben geneigt ausgebildet, wodurch der Kraftstofftank 2 an die ebenfalls nach oben weisenden Oberzüge 18, 20 (vgl. Fig. 2) angepasst ist. Der Behälter 3 ist dabei im ersten Endbereich 4 des Kraftstofftanks 2, welcher dem vorderen Viertel entspricht und somit in dem nach oben geneigten Bereich der Unterseite 8 angeordnet. Wie aus der Vorderansicht erkennbar, ist der Behälter 3 in dieser Ansicht von den davor liegenden Bauteilen wie etwa dem Scheinwerfer überdeckt, sodass auch hier ein gewisser Schutz gegeben ist.

Fig. 1d zeigt das erfindungsgemäße Motorrad 1 in einer Ansicht von hinten.

Fig. 2 zeigt das erfindungsgemäße Motorrad 1 in einer schematischen Seitenansicht, wobei der Kraftstofftank 2 in der Gebrauchsstellung ist, in der das Motorrad 1 fahrbereit ist. Die schematische Darstellung entspricht dabei nicht dem tatsächlichen Motorrad, da einige Bauteile nicht vollständig oder nur schematisch dargestellt sind. Der Behälter 3 ist an Unterseite 8 des Kraftstofftanks 2 in einem ersten Endbereich 4 angeordnet, der der Lenkung 13 zugewandt ist. Im zweiten, dem ersten Endbereich 4 gegenüberliegenden Endbereich 5 ist eine Gelenkverbindung 6 vorgesehen, mit der der Kraftstofftank 2 um eine Achse A von der Gebrauchsstellung in eine Wartungsstellung verschwenkbar ist. Die Gelenkverbindung 6 ist am hinteren Ende des Kraftstofftanks 2 angeordnet und wird im Betriebszustand des Motorrads vom Sattel 14 überdeckt.

In der Gebrauchsstellung ist der Behälter 3 durch die am linken Seitenelement 15 und am rechten Seitenelement 16 des Rahmens 7 angeordneten Oberzüge 18, 20 und Unterzüge 17, 19 geschützt (vgl. Fig. 1a und 1b). Der schematisch dargestellte Kühler 24 befindet sich in Fahrtrichtung gesehen vor dem Motor 12 und kühlt nach Abschalten des Motorrads 1 den Motor 12 aber auch den Behälter 3 und die darin angeordnete Speichervorrichtung. Im Betrieb des Motorrads 1 wird von der Speichervorrichtung re-emittierter Kraftstoff über die Ableitung 10 dem Motor zugeführt. Im Kraftstofftank 2 verdunstender Kraftstoff wird über die Zuleitung 9 dem Behälter 3 zugeführt und von der darin angeordneten Speichervorrichtung, etwa in Form eines Aktivkohlefilters, gespeichert.

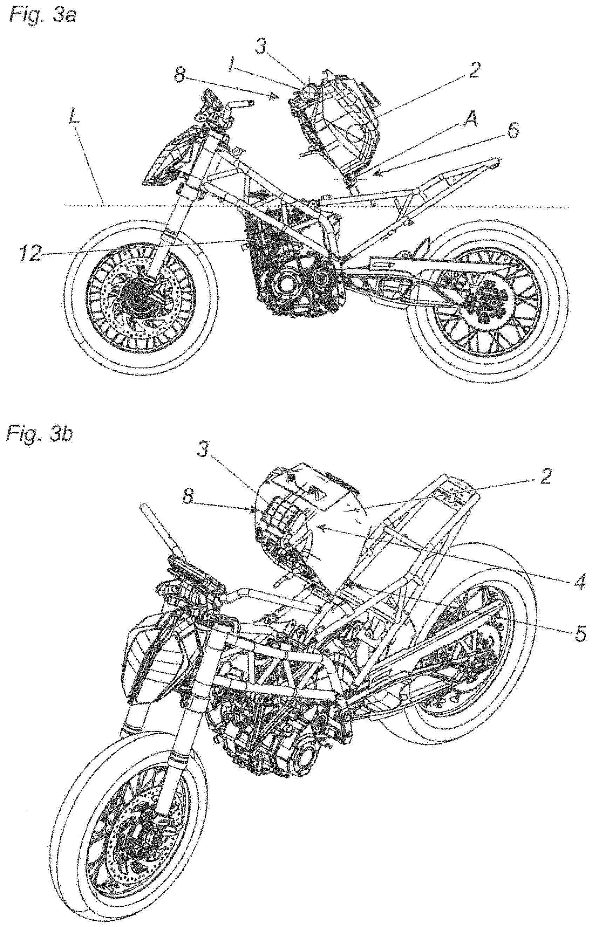

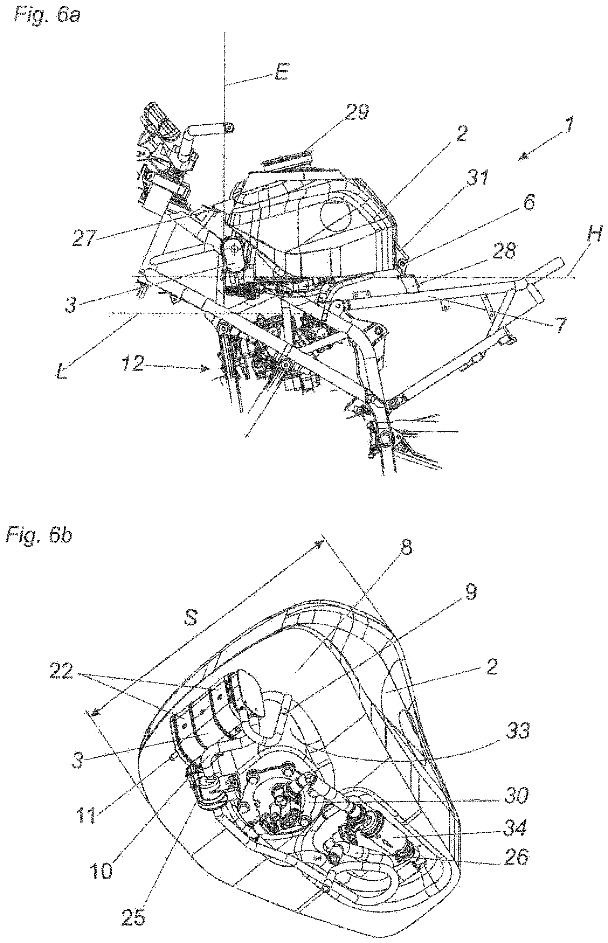

Fig. 3a zeigt eine weitere schematische Seitenansicht, wobei der Kraftstofftank 2 nunmehr in die Wartungsstellung verschwenkt ist. Die Verschwenkachse A ist in Querrichtung des Motorrads 1, also senkrecht zur Längsrichtung L des Motorrads 1 angeordnet. Die Längsrichtung I des Behälters 3 weist ebenfalls in Richtung der Achse A. Der Behälter 3 ist an der Unterseite 8 des Kraftstofftanks 2 befestigt und wird gemeinsam mit diesem nach oben verschwenkt. Die Zuleitung 9 und die Ableitung 10 (vgl. Fig 6b) sind als flexible Schläuche ausgebildet und werden daher trotz der Verschwenkung nicht beschädigt und können flexibel platziert werden. Die unter dem Kraftstofftank 2 angeordneten Bauteile, insbesondere der Zylinderkopf sind in dieser Stellung für Wartungsmaßnahmen gut zugänglich.

Fig. 3b zeigt in einer schematischen perspektivischen Ansicht ein Detail des Kraftstofftanks 2 in der Wartungsstellung. Erkennbar ist, dass der Behälter 3 in einem vorderen Endbereich an der Unterseite 8 des Kraftstofftanks 2 am Kraftstofftank 2 befestigt ist. In diesem Bereich ist die Unterseite 8 nach oben geneigt. In der Wartungsstellung sind die unter dem Kraftstofftank 2 angeordneten Fahrzeugteile gut zugänglich. Aufgrund der Anordnung des Behälters 3 im vorderen Endbereich 4 und der schwenkbaren Lagerung im hinteren Endbereich 5 kann auch ohne Rollover-Ventil verhindert werden, dass flüssiger Kraftstoff beim Verschwenken in den Behälter 3 gelangt.

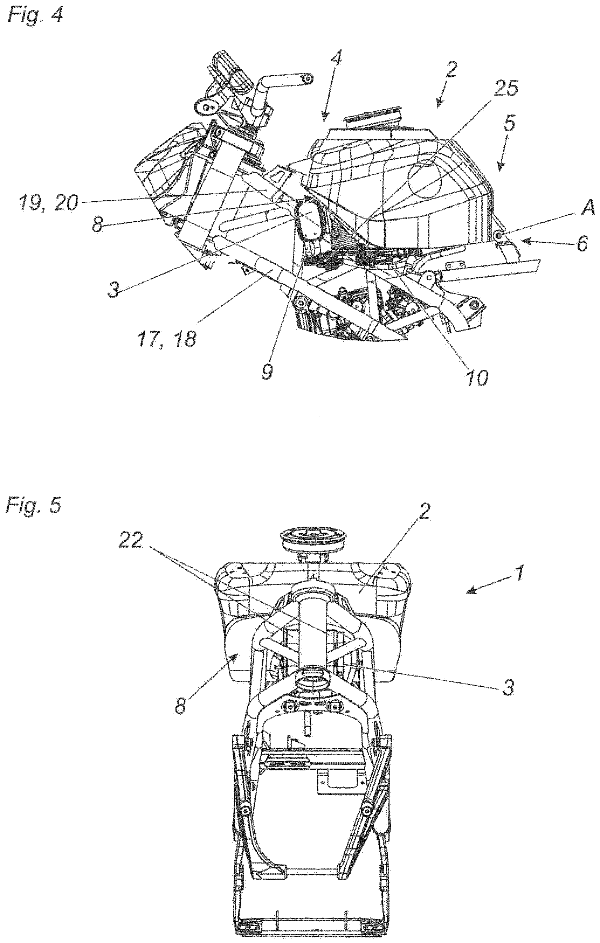

Fig. 4 zeigt eine schematische Darstellung von Teilen des erfindungsgemäßen Motorrads 1 in einer Seitenansicht, wobei der Kraftstofftank 2 in der Gebrauchsstellung ist. Der Behälter 3 ist an der Unterseite 8 des Kraftstofftanks 2 im vorderen Endbereich 4, entsprechend dem vorderen Viertel des Kraftstofftanks 2 befestigt und wird gemeinsam mit diesem in die Wartungsstellung verschwenkt werden, wobei die Verschwenkachse A im gegenüberliegenden zweiten Endbereich 5 angeordnet ist. Gut erkennbar ist, dass der Behälter 3 und die Zu- und Ableitung 9, 10 sowie auch das Entlüftungsventil 25 von den Oberzügen 19, 20 und von den Unterzügen 17, 18 in der Gebrauchsstellung umschlossen und gut geschützt wird.

Fig. 5 zeigt eine schematische Ansicht von vorne auf Teile des Motorrads 1, wobei die Befestigung des Behälters 3 auf der Unterseite 8 des Kraftstofftanks 2 erkennbar ist, wobei elastische Befestigungsmittel 22 um den zylinderförmig ausgebildeten Behälter 3 angeordnet sind. Die Befestigungsmittel 22 sind über weitere, in dieser Darstellung nicht erkennbare Befestigungsmittel, beispielsweise einer Klammer 21, an der Unterseite 8 des Tanks 2 befestigt. Die Zuleitung 9 ist als flexibler Schlauch ausgebildet, der vom Kraftstofftank 2 über ein Entlüftungsventil 25 in den Behälter 3 mündet.

Fig. 6a und 6b stellen den Kraftstofftank 2 des erfindungsgemäßen Motorrads 1 in der Gebrauchsstellung in einer Seitansicht und einer perspektivischen Ansicht von unten dar. Erkennbar ist einerseits die am hinteren Ende und somit auch im hinteren Endbereich 5 angeordnete Gelenkverbindung 6, über die der Kraftstofftank 2 von der Gebrauchsstellung, in der das Motorrad 1 fahrbereit ist, in die Wartungsstellung verschwenkt werden kann. In der gezeigten Ausführungsform weist die Gelenkverbindung 6 einerseits einen am Kraftstofftank 2 ausgebildeten zweiten Flansch 31 und einen am Rahmen 7 befestigten ersten Flansch 28 auf. Selbstverständlich kann dies auch umgekehrt vorgesehen oder mit anderen Mitteln realisiert sein.

Am vorderen Ende sind Befestigungsmittel 27 vorgesehen, welche verhindern können, dass der Kraftstofftank 2 ungewollt in die Wartungsstellung verschwenkt wird. Ein Verschwenken ist erst nach Lösen der Befestigungsmittel 27 möglich. Am unteren Ende des Kraftstofftanks 2 ist die Kraftstoffzufuhr 30 einschließlich der Kraftstoffpumpe angeordnet, welche für die Versorgung des Motors 12 mit Kraftstoff über den Kraftstofffilter 34 und die Kraftstoffleitung 26 verantwortlich ist.

Am nach oben geneigten vorderen Endbereich der Unterseite 8 ist der im Wesentlichen zylinderförmige Behälter 3 befestigt, wobei die Längsrichtung I des Behälters 3 in Querrichtung des Motorrads 1, also senkrecht zur Längsrichtung L des Motorrads 1 angeordnet ist. Durch die Befestigung an der Unterseite 8 ist der Behälter 3 gut vor mechanischer Belastung geschützt, wobei durch die teilweise zylinderförmige Ausbuchtung 33 der Unterseite 8 des Kraftstofftanks 2, an der die Kraftstoffzufuhr 30 mit der Kraftstoffpumpe angeordnet ist, ein weiterer Schutz des Behälters 3 bewirkt werden kann, der in dieser Ausführungsform unmittelbar vor dieser Ausbuchtung 33 an der Unterseite 8 des Kraftstofftanks 2 befestigt ist. Die Zuleitung 9 und/oder die Ableitung 10 können, etwa mit elastischen Befestigungsmitteln, am Kraftstofftank 2 befestigt sein. Dies ist in Fig. 6a und 6b jedoch nicht dargestellt. Dadurch ist eine Vorinstallation des Emissionssystems am Kraftstofftank 2 möglich, wodurch die Montage des Motorrads 1 erleichtert wird. Dabei ist der Behälter 3 derart am Kraftstofftank 2 befestigt, dass dieser in der dargestellten Seitenansicht zur Gänze hinter einer gedachten vertikalen Ebene E am vorderen Ende des Kraftstofftanks 3 und ober einer gedachten horizontalen Ebene H am unteren Ende des Kraftstofftanks 2 angeordnet ist.

Fig. 6b zeigt den Tank der Figur 6a in einer perspektivischen Ansicht von unten, wobei erkennbar ist, dass die Ausdehnung des zylinderförmigen Behälters 3, der an der Unterseite 8 des Kraftstofftanks 2 befestigt ist, etwa 40% der Seitenausdehnung S des Kraftstofftanks 2 beträgt und somit von diesem überdeckt wird. Durch diese Größe kann sowohl der Behälter 3 als auch die Zuleitung 9, die Ableitung 10, und das Entlüftungsventil 25 zwischen dem linken Seitenelement 15 und dem rechten Seitenelement 16 des Rahmens 7 angeordnet sein, sodass sich ein optimaler Schutz vor mechanischer Beschädigung ergibt. Durch die in der vorderen Hälfte nach oben weisende Unterseite 8 des Kraftstofftanks 2 ergibt sich ein weiterer Schutz durch die Querstreben mit denen die Oberzüge 19, 20 mit den Unterzügen 17, 18 verbunden sind. Das Entlüftungsventil 25 ist in der Ableitung 10 angeordnet und steuert in diesem Ausführungsbeispiel die Zufuhr von aus dem Behälter 3 reemittiertem Kraftstoffgas zum Motor 12 in Abhängigkeit vom Betriebszustand des Motors 12. Das Entlüftungsventil 25 ist in diesem Ausführungsbeispiel somit ein elektronisch gesteuertes Ventil.

Der Behälter 3 ist mit elastischen Befestigungsmitteln 22 in Form zweier Bänder am Kraftstofftank 3 befestigt. Zu diesem Zweck sind die Befestigungsmittel 22 an Klammern 21 befestigt, welche ihrerseits am Kraftstofftank 2 angeordnet sind. An der Unterseite 8 des Kraftstofftanks 2 tritt die Zuleitung 9 aus dem Kraftstofftank 2 hervor und verläuft weiter bis zum Behälter 3. Aus dem Behälter tritt die Ableitung 10 aus, über die Kraftstoffgas zum Motor 12 zugeführt wird. Zur Kontrolle und Steuerung dieser Zufuhr ist ein Entlüftungsventil 25 im Verlauf der Ableitung 10 angeordnet. Eine gesonderte Abflussleitung ist in dieser Ausführungsform nicht vorgesehen.

Am Behälter 3 sind auf einer Stirnseite Be- und Entlüftungsvorrichtungen 11 angeordnet, über die Luft in den Behälter 3 zur darin angeordneten Speichervorrichtung für Kraftstoffgas angesaugt werden kann, um den Betrieb der Speichervorrichtung und vor allem der Re-Emission zu unterstützen. Zudem kann Kraftstoffgas aus dem Behälter 3 über die Be- und Entlüftungsvorrichtungen 11 entweichen, etwa wenn zuviel Kraftstoffgas im Ruhezustand des Motorrads 1 emittiert wird, wenn dieses nicht vom Motor 12 verbraucht werden kann. Die gezeigten Be- und Entlüftungsvorrichtungen 11 übernehmen somit auch die Aufgaben der Abflussleitung. Die Be- und Entlüftungsvorrichtungen 11 können alternativ in einer einzigen Vorrichtung oder auch in mehreren Vorrichtungen realisiert sein.

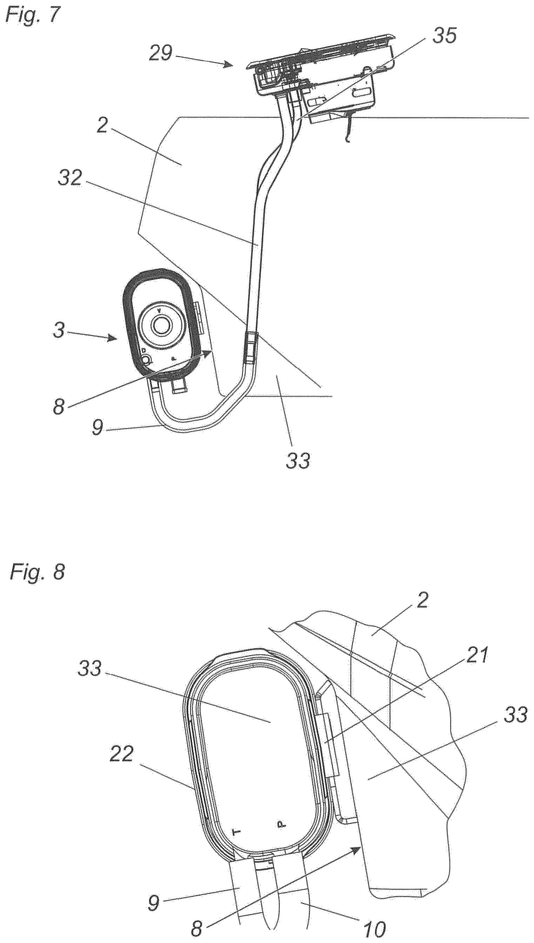

Fig. 7 zeigt eine schematische Darstellung des Kraftstofftanks 2 und des zumindest teilweise im Kraftstofftank 2 angeordneten Zuleitungsrohrs 32, welches dicht mit der Zuleitung 9 verbunden ist. Dabei kann die Verbindung der Zuleitung 9 und des Zuleitungsrohrs 32 innerhalb oder außerhalb des Kraftstofftanks 2 angeordnet sein. Das Zuleitungsrohr 32 reicht bis in den an der Oberseite des Kraftstofftanks 2 angeordneten Tankdeckel 29. Über eine in dieser Darstellung nicht gezeigte Öffnung im Tankdeckel 29 kann im Kraftstofftank 2 verdunsteter Kraftstoff in das Zuleitungsrohr 32 strömen und von dort weiter in die Zuleitung 9, wobei das Gas in weiterer Folge von der im Behälter 3 angeordneten Speichervorrichtung gespeichert wird. Das in dieser Darstellung gezeigte Rohr 35 ist ein Tanküberlauf, über welchen zu viel getankter Kraftstoff entweichen kann.

Gut erkennbar ist in der Fig. 7 auch die zylindrische Ausbuchtung 33 der Unterseite 8 des Kraftstofftanks 2. In diesem Ausführungsbeispiel ist der Behälter 3 an der zylindrischen Ausbuchtung 33 befestigt. Aufgrund der geometrischen Ausgestaltung der Unterseite 8 des Kraftstofftanks ist der Behälter 3 ideal geschützt.

Fig. 8 zeigt eine schematische Darstellung der Befestigung des Behälters 3 an der Unterseite 8 des Kraftstofftanks 2. In diesem Fall sind die elastischen Bänder 22 an einer Klammer 21 befestigt, die an Tank 2 ausgebildet oder befestigt ist.

### Bezugszeichenliste

- 1: Motorrad
- 2: Kraftstofftank
- 3: Behälter
- 4: erster Endbereich
- 5: zweiter Endbereich
- 6: Gelenkverbindung
- 7: Rahmen
- 8: Unterseite des Kraftstofftanks
- 9: Zuleitung zum Behälter
- 10: Ableitung vom Behälter
- 11: Be- und Entlüftungsvorrichtung
- 12: Verbrennungsmotor
- 13: Lenkung
- 14: Sattel
- 15: linkes Seitenelement
- 16: rechtes Seitenelement
- 17: Unterzug, linkes Seitenelement
- 18: Oberzug, linkes Seitenelement
- 19: Unterzug, rechtes Seitenelement
- 20: Oberzug, rechtes Seitenelement
- 21: Klammer
- 22: elastisches Befestigungsmittel
- 23: Vorderseite des Kraftstofftanks
- 24: Kühler
- 25: Entlüftungsventil
- 26: Kraftstoffleitungen
- 27: Befestigungsmittel
- 28: erster Flansch
- 29: Tankdeckel
- 30: Kraftstoffzufuhr
- 31: zweiter Flansch
- 32: Zuleitungsrohr
- 33: Ausbuchtung
- 34: Kraftstofffilter
- 35: Tanküberlauf
- L: Längsrichtung des Motorrads
- I: Längsrichtung des Behälters
- A: Achse
- S: seitliche Ausdehnung des Kraftstofftanks
- E: Vertikalebene
- H: Horizontalebene

## Patentansprüche

1. Motorrad, umfassend:
- einen Verbrennungsmotor,
- einen Rahmen,
- einen Kraftstofftank zur Lagerung eines vom Verbrennungsmotor zu verbrauchenden Kraftstoffs,
- einen, vorzugsweise im Wesentlichen zylinderförmig ausgebildeten, Behälter, der mit dem Verbrennungsmotor und dem Kraftstofftank verbunden ist, wobei der Behälter zur Speicherung von aus dem Kraftstofftank verdunstendem Kraftstoff ausgebildet ist,
wobei der Behälter in einer Gebrauchsstellung zumindest teilweise vom Kraftstofftank überdeckt ist, wobei der Kraftstofftank (2) relativ zum Rahmen (7) zwischen einer Wartungsstellung und der Gebrauchsstellung schwenkbar gelagert ist, **dadurch gekennzeichnet, dass** der Behälter (3) an einer Unterseite (8) oder an einer Vorderseite (23) des Kraftstofftanks (2) am Kraftstofftank (2) befestigt ist und gemeinsam mit diesem schwenkbar ist.

2. Motorrad nach Anspruch 1, wobei die schwenkbare Lagerung des Kraftstofftanks (2) in einer ersten Hälfte des Kraftstofftanks (2) erfolgt und der Behälter (3) auf der anderen Hälfte des Kraftstofftanks (2) am Kraftstofftank (2) befestigt ist.

3. Motorrad nach Anspruch 1 oder 2, wobei die schwenkbare Lagerung des Kraftstofftanks (2) an einem ersten Endbereich (4) des Kraftstofftanks (2) erfolgt und der Behälter (3) an einem dem ersten Endbereich gegenüberliegenden zweiten Endbereich (5) des Kraftstofftanks (2) am Kraftstofftank (2) befestigt ist.

4. Motorrad nach einem der Ansprüche 1 bis 3, wobei der Kraftstofftank (2) mit dem Behälter (3) über eine Zuleitung (9) verbunden ist, und der Behälter (3) relativ zur Zuleitung (9) an einer Position des Kraftstofftanks (2) am Kraftstofftank (2) befestigt ist, dass bei einem Verschwenken des Kraftstofftanks (2) in die Wartungsstellung ein Zufluss von flüssigem Kraftstoff in den Behälter (3) verhindert wird.

5. Motorrad nach einem der Ansprüche 1 bis 4, wobei der Kraftstofftank (2) über eine, vorzugsweise als Scharnier ausgebildete, Gelenkverbindung (6) schwenkbar am Motorrad (1), vorzugsweise am Rahmen (7), gelagert ist.

6. Motorrad nach einem der Ansprüche 1 bis 5, wobei der Kraftstofftank (2) um eine senkrecht zur Längsrichtung (L) des Motorrads angeordnete Achse (A) schwenkbar gelagert ist.

7. Motorrad nach einem der Ansprüche 1 bis 6, wobei der Behälter (3) mit einer Zuleitung (9) und/oder einer Ableitung (10) verbunden ist, wobei der im Kraftstofftank (2) verdunstende Kraftstoff über die Zuleitung (9) zum Behälter (2) geleitet wird, und wobei Kraftstoff im Betrieb des Motorrads (1) über die Ableitung (10) vom Behälter (3) zum Verbrennungsmotor (12) geleitet wird, und wobei die Zuleitung (9) und/oder die Ableitung (10) zumindest teilweise am Kraftstofftank (2) befestigt ist oder sind.

8. Motorrad nach einem der Ansprüche 1 bis 7, wobei das Motorrad (1) eine Lenkung (13) aufweist und wobei der Kraftstofftank (2) auf der von der Lenkung (13) entfernten Seite des Kraftstofftanks (2) schwenkbar gelagert ist.

9. Motorrad nach einem der Ansprüche 1 bis 8, wobei das Motorrad (1) einen an den Kraftstofftank (2) anschließenden Sattel (14) aufweist und wobei der Kraftstofftank (2) im Bereich des Sattels (14) schwenkbar gelagert ist.

10. Motorrad nach einem der Ansprüche 1 bis 9, wobei der Rahmen (7) des Motorrads (1) an der in Fahrrichtung betrachteten linken Seite und rechten Seite Seitenelemente (15,16) aufweist, wobei der Behälter (3) zwischen den Seitenelementen angeordnet ist.

11. Motorrad nach Anspruch 10, wobei der Rahmen (7) als Doppelrohrrahmen, vorzugsweise als Gitterrohrrahmen, ausgebildet ist, wobei jedes der Seitenelemente (15,10) einen Oberzug (18,20) und einem Unterzug (17,19) aufweist, und wobei der Behälter (3) in der Gebrauchsstellung des Kraftstofftanks (2) im Wesentlichen zwischen dem Oberzug (18,20) und dem Unterzug (17,19) angeordnet ist.

12. Motorrad nach einem der Ansprüche 1 bis 11, wobei die Längsrichtung (I) des Behälters (3) senkrecht zur Längsrichtung (L) des Motorrads (1) angeordnet ist und/oder der Behälter (3) in befestigtem Zustand eine Ausdehnung in seiner Längsrichtung zwischen 20% und 90 %, vorzugsweise zwischen 30% und 60%, der Ausdehnung (5) des Kraftstofftanks (2) in dieser Richtung aufweist.

13. Motorrad nach einem der Ansprüche 1 bis 12, wobei der Behälter (3) in der Gebrauchsstellung zumindest teilweise, vorzugsweise zur Gänze, oberhalb des unteren Endes des Kraftstofftanks (2) angeordnet ist.

14. Motorrad nach einem der Ansprüche 1 bis 13, wobei der Behälter (3) in der Gebrauchsstellung in Seitenrichtung zumindest teilweise, vorzugsweise zur Gänze, hinter einer gedachten Vertikalebene (E) am vorderen Ende des Kraftstofftanks (2) angeordnet ist.

15. Motorrad nach einem der Ansprüche 1 bis 14, wobei der Behälter (3) über eine metallische Klammer (21) und/oder ein elastisches Befestigungsmittel (22) am Kraftstofftank (2) befestigt ist.

## Claims

1. A motor cycle including:
- an internal combustion engine,
- a frame,
- a fuel tank for carrying a fuel to be consumed by the internal combustion engine,
- a container, preferably essentially cylindrically shaped, which is connected to the internal combustion engine and the fuel tank, wherein the container is adapted to store fuel evaporating from the fuel tank, wherein the container in a position of use is at least partially covered by the fuel tank, wherein the fuel tank (2) is supported pivotably relative to the frame (7) between a maintenance position and the position of use, **characterized in that** the container (3) is fixed to the fuel tank (2) at an underside (8) or at a front side (23) of the fuel tank (2) and is pivotable jointly with same.

2. A motor cycle as set forth in claim 1, wherein the pivotable mounting of the fuel tank (2) is provided in a first half of the fuel tank (2) and the container (3) is fixed to the fuel tank (2) on the other half of the fuel tank (2).

3. A motor cycle as set forth in claim 1 or 2, wherein the pivotable mounting of the fuel tank (2) is provided at a first end region (4) of the fuel tank (2) and the container (3) is fixed to the fuel tank (2) at a second end region (5) of the fuel tank (2), that is opposite to the first end region.

4. A motor cycle as set forth in one of claims 1 through 3, wherein the fuel tank (2) is connected to the container (3) by way of a feed line (9) and the container (3) is fixed to the fuel tank (2) at a position of the fuel tank (2) relative to the feed line (9) such that upon a pivotal movement of the fuel tank (2) into the maintenance position a feed flow of liquid fuel into the container (3) is prevented.

5. A motor cycle as set forth in one of claims 1 through 4, wherein the fuel tank (2) is mounted to the motor cycle (1), preferably to the frame (7), pivotably by way of a joint connection (6) which is preferably in the form of a hinge.

6. A motor cycle as set forth in one of claims 1 through 5, wherein the fuel tank (2) is mounted pivotably about an axis (A) arranged perpendicularly to the longitudinal direction (L) of the motor cycle.

7. A motor cycle as set forth in one of claims 1 through 6, wherein the container (3) is connected to a feed line (9) and/or a discharge line (10), wherein the fuel evaporating in the fuel tank (2) is passed by way of the feed line (9) to the container (2) and wherein fuel in operation of the motor cycle (1) is passed by way of the discharge line (10) from the container (3) to the internal combustion engine (12) and wherein the feed line (9) and/or the discharge line (10) is or are at least partially fixed to the fuel tank (2).

8. A motor cycle as set forth in one of claims 1 through 7, wherein the motor cycle (1) has a steering arrangement (13) and wherein the fuel tank (2) is mounted pivotably on the side of the fuel tank (2), that is remote from the steering arrangement (13).

9. A motor cycle as set forth in one of claims 1 through 8, wherein the motor cycle (1) has a saddle (14) adjoining the fuel tank (2) and wherein the fuel tank (2) is mounted pivotably in the region of the saddle (14) .

10. A motor cycle as set forth in one of claims 1 through 9, wherein the motor cycle (1) has a frame (7) which has lateral elements (15, 16) at the left-hand and right-hand sides as viewed in the direction of travel, the container (3) being arranged between the lateral elements.

11. A motor cycle as set forth in claim 10, wherein the frame (7) is in the form of a double-tube frame, preferably a trellis tube frame, wherein each of the lateral elements (15, 10) has an upper frame tube (18, 20) and a lower frame tube (17, 19), and wherein the container (3) in the position of use of the fuel tank (2) is arranged substantially between the upper frame tube (18, 20) and the lower frame tube (17, 19).

12. A motor cycle as set forth in one of claims 1 through 11, wherein the longitudinal direction (1) of the container (3) is arranged perpendicularly to the longitudinal direction (L) of the motor cycle (1) and/or the container (3) in the fixed state is of an extent of between 20% and 90%, preferably between 30% and 60%, of the extent (5) of the fuel tank (2) in this direction.

13. A motor cycle as set forth in one of claims 1 through 12, wherein the container (3) in the position of use is arranged at least partially and preferably entirely above the lower end of the fuel tank (2).

14. A motor cycle as set forth in one of claims 1 through 13, wherein the container (3) in the position of use in the lateral direction is arranged at least partially and preferably entirely behind a notional vertical plane (E) at the front end of the fuel tank (2) .

15. A motor cycle as set forth in one of claims 1 through 14, wherein the container (3) is fixed to the fuel tank (2) by way of a metallic clip (21) and/or an elastic fixing means (22).

## Revendications

1. Motocycle, comprenant :
- un moteur à combustion interne,
- un cadre,
- un réservoir de carburant pour stocker un carburant qui sera consommé par le moteur à combustion interne,
- un contenant réalisé de préférence sensiblement avec une forme cylindrique, qui est relié au moteur à combustion interne et au réservoir de carburant, le contenant étant réalisé pour entreposer du carburant s'évaporant depuis le réservoir de carburant,
dans lequel le contenant est recouvert, dans une position d'utilisation, au moins en partie par le réservoir de carburant, dans lequel le réservoir de carburant (2) est monté de manière à pouvoir pivoter entre une position de maintenance et la position d'utilisation par rapport au cadre (7), **caractérisé en ce que** le contenant (3) est fixé sur le réservoir de carburant (2) sur un côté inférieur (8) ou sur un côté avant (23) du réservoir de carburant (2) et peut pivoter conjointement avec celui-ci.

2. Motocycle selon la revendication 1, dans lequel le montage pivotant du réservoir de carburant (2) a lieu dans une première moitié du réservoir de carburant (2), et le contenant (3) est fixé sur le réservoir de carburant (2) sur l'autre moitié du réservoir de carburant (2).

3. Motocycle selon la revendication 1 ou 2, dans lequel le montage pivotant du réservoir de carburant (2) a lieu sur une première zone d'extrémité (4) du réservoir de carburant (2) et le contenant (3) est fixé sur le réservoir de carburant (2) sur une deuxième zone d'extrémité (5) du réservoir de carburant (2) faisant face à la première zone d'extrémité.

4. Motocycle selon l'une quelconque des revendications 1 à 3, dans lequel le réservoir de carburant (2) est relié au contenant (3) par l'intermédiaire d'une conduite d'arrivée (9), et le contenant (3) est fixé sur le réservoir de carburant (2) sur une position du réservoir de carburant (2) par rapport à la conduite d'arrivée (9), et que lors d'un pivotement du réservoir de carburant (2) dans la position de maintenance, une arrivée de flux de carburant liquide dans le contenant (3) est empêchée.

5. Motocycle selon l'une quelconque des revendications 1 à 4, dans lequel le réservoir de carburant (2) est monté de manière à pouvoir pivoter sur le motocycle (1), de préférence sur le cadre (7), par l'intermédiaire d'une liaison articulée (6) réalisée de préférence en tant que charnière.

6. Motocycle selon l'une quelconque des revendications 1 à 5, dans lequel le réservoir de carburant (2) est monté de manière à pouvoir pivoter autour d'un axe (A) disposé de manière perpendiculaire par rapport au sens longitudinal (L) du motocycle.

7. Motocycle selon l'une quelconque des revendications 1 à 6, dans lequel le contenant (3) est relié à une conduite d'arrivée (9) et/ou à une conduite de sortie (10), dans lequel le carburant s'évaporant dans le réservoir de carburant (2) est acheminé vers le contenant (2) par l'intermédiaire de la conduite d'arrivée (9), et dans lequel du carburant est acheminé, lors du fonctionnement du motocycle (1), depuis le contenant (3) vers le moteur à combustion interne (12) par l'intermédiaire de la conduite de sortie (10), et dans lequel la conduite d'arrivée (9) et/ou la conduite de sortie (10) est fixée ou sont fixées au moins en partie sur le réservoir de carburant (2).

8. Motocycle selon l'une quelconque des revendications 1 à 7, le motocycle (1) présentant une direction (13) et dans lequel le réservoir de carburant (2) est monté de manière à pouvoir pivoter sur le côté, éloigné de la direction (13), du réservoir de carburant (2).

9. Motocycle selon l'une quelconque des revendications 1 à 8, le motocycle (1) présentant une selle (14) se raccordant au réservoir de carburant (2) et dans lequel le réservoir de carburant (2) est monté de manière à pouvoir pivoter dans la zone de la selle (14) .

10. Motocycle selon l'une quelconque des revendications 1 à 9, dans lequel le cadre (7) du motocycle (1) présente sur le côté droit et le côté gauche observés dans le sens de déplacement, des éléments latéraux (15, 16), dans lequel le contenant (3) est disposé entre les éléments latéraux.

11. Motocycle selon la revendication 10, dans lequel le cadre (7) est réalisé en tant que cadre à double tube, de préférence en tant que cadre en treillis tubulaire, dans lequel chacun des éléments latéraux (15, 10) présente une membrure supérieure (18, 20) et une membrure inférieure (17, 19), et dans lequel le contenant (3) est disposé sensiblement entre la membrure supérieure (18, 20) et la membrure inférieure (17, 19) dans la position d'utilisation du réservoir de carburant (2).

12. Motocycle selon l'une quelconque des revendications 1 à 11, dans lequel le sens longitudinal (I) du contenant (3) est disposé de manière perpendiculaire par rapport au sens longitudinal (L) du motocycle (1), et/ou le contenant (3) présente, dans un état fixé, une extension dans son sens longitudinal entre 20 % et 90 %, de préférence entre 30 % et 60 %, de l'extension (5) du réservoir de carburant (2) dans ce sens.

13. Motocycle selon l'une quelconque des revendications 1 à 12, dans lequel le contenant (3) est disposé dans la position d'utilisation au moins en partie, de préférence en totalité, au-dessus de l'extrémité inférieure du réservoir de carburant (2).

14. Motocycle selon l'une quelconque des revendications 1 à 13, dans lequel le contenant (3) est disposé dans la position d'utilisation dans le sens latéral au moins en partie, de préférence en totalité, derrière un plan vertical (E) imaginaire sur l'extrémité avant du réservoir de carburant (2).

15. Motocycle selon l'une quelconque des revendications 1 à 14, dans lequel le contenant (3) est fixé sur le réservoir de carburant (2) par l'intermédiaire d'une attache métallique (21) et/ou d'un moyen de fixation (22) élastique.
